# FASCICULE DE BREVET EUROPEEN

(11) **EP 1 241 436 B1**
(45) Date de publication et mention de la délivrance du brevet: **19.11.2014**
(21) Numéro de dépôt: 01810258.2
(22) Date de dépôt: 14.03.2001
(51) Int. Cl.: G01B 5/008, G01B 7/008, G01B 5/12, G01B 7/13

(54) **Colonne de mesure de dimensions, et procédé permettant d'introduire une commande de changement de mode de mesure dans une telle colonne.**
Koordinatenmessmaschine und Verfahren zum Einbringen eines Kommandos zum Ändern des Messmodus
Coordinate measuring machine and method for introducing a command to change the measurement mode in this machine

(43) Date de publication de la demande: 18.09.2002
(73) Titulaire: TESA SA, 1020 Renens (CH)
(72) Inventeur: Zufferey, Charles-Henri, 1976 Erde (CH); Jordil, Pascal, 1612 Ecoteaux (CH)
(74) Mandataire: P&TS SA (AG, Ltd.)

(56) Documents cités:
- EP-A- 0 243 693
- EP-A- 0 916 923
- GB-A- 2 037 436
- US-A- 4 333 238
- US-A- 4 679 326
- US-A- 5 222 034
- US-A- 6 131 301

## Description

La présente invention concerne une colonne de mesure de dimensions, notamment une colonne à un seul axe vertical, ainsi qu'un procédé permettant d'introduire des commandes de changement de mode de mesure dans une telle colonne.

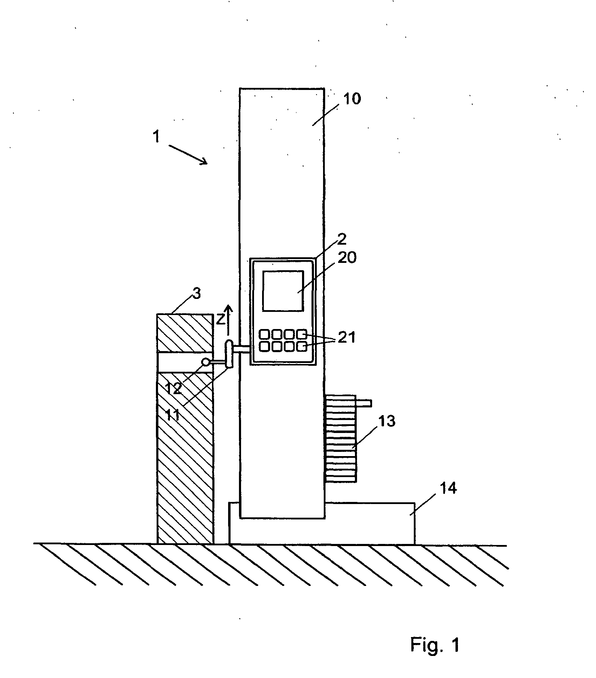

Les colonnes de mesure de dimensions verticales sont fréquemment utilisées dans des ateliers de mécanique ou dans l'industrie pour mesurer différentes coordonnées verticales d'une pièce. Un exemple de colonne de mesure 1 est représenté schématiquement sur la figure 1. La colonne représentée comporte une touche de palpage 12 montée sur un chariot de mesure 11 et mise en contact avec la pièce à mesurer 3 et un mécanisme de déplacement vertical (non représenté) commandé par une manivelle 13 et permettant de déplacer verticalement cette touche de palpage selon l'axe z. Le mécanisme de déplacement vertical peut être manuel ou motorisé selon le modèle. Un système de mesure et d'affichage 2 permet de déterminer la position verticale de la touche de palpage et d'afficher cette position sur un affichage. Le système 2 permet également de mesurer la force d'appui de la touche de palpage contre la pièce 3. Le système de mesure fait par exemple appel à un capteur capacitif, inductif, magnétorésistif ou optique comprenant par exemple une règle dans le bâti 10 et un capteur dans le pupitre 2.

Les colonnes de mesure usuelles ont un bâti 10 d'une hauteur habituellement comprise entre 50 centimètres et 2 mètres et permettent de mesurer la position verticale de la touche de palpage 12 avec une précision de l'ordre de quelques microns ou moins. La pièce à mesurer 3 est placée près de la colonne de mesure 1 et la touche de palpage est déplacée verticalement de manière à s'appuyer contre la portion de la pièce dont on souhaite mesurer la coordonnée verticale. La colonne de mesure 1 peut être montée sur une semelle 14 à coussin d'air permettant de faciliter son déplacement horizontal. De telles colonnes de mesure sont décrites par exemple dans les documents US4187612 et US3895356. De telles colonnes de mesure sont en outre commercialisées par la demanderesse sous le nom micro-hite (marque déposée) et Tesa-hite (marque déposée) par exemple.

Les colonnes de mesure moderne sont habituellement munies d'un système de mesure et d'affichage numérique 2 permettant d'effectuer des mesures selon différents modes, par exemple pour afficher soit la hauteur absolue d'un point, soit la différence entre deux points de mesure successifs. Des boutons de commande 21 sur le système de mesure permettent de changer de mode de mesure. Différents exemples de modes de mesure utiles sont décrits dans le brevet US3895356 mentionné.

On connaît également des colonnes de mesure permettant de mesurer le diamètre interne d'un trou ou le diamètre externe d'une tige par exemple. Pour cela, il est nécessaire de mesurer successivement les deux points de rebroussement, c'est-à-dire le point le plus bas et le point le plus haut du trou ou de la tige et de calculer la différence de hauteur entre ces deux extrémas.

Différents systèmes et procédés existent pour déterminer les extrémas d'un trou ou d'une tige à l'aide d'une colonne de mesure 1 à un seul axe vertical. Des dispositifs existent par exemple qui permettent à la touche de palpage de coulisser horizontalement selon un axe x perpendiculaire à la page. En exerçant une pression verticale sur l'axe z, la touche de palpage 12 vient s'appuyer d'elle-même contre le point le plus bas, respectivement contre le point le plus haut, d'un trou. Une mesure est effectuée en chacun de ces deux points et la différence calculée pour déterminer le diamètre et/ou le centre du trou. Ces dispositifs mécaniques sont toutefois coûteux et affectent la précision globale du système de mesure. De surcroît, la taille des trous à mesurer est limitée par l'amplitude maximale de déplacement horizontal de la touche de palpage. Enfin, ces dispositifs sont mal adaptés à la mesure de diamètres externes, par exemple lorsqu'il s'agit de mesurer le diamètre d'une tige.

On connaît également des systèmes capables de déterminer automatiquement les points de rebroussement (extrémas) d'un trou ou d'une tige. Pour cela, il est nécessaire d'introduire dans le système de mesure et d'affichage 2 une commande permettant de le faire passer dans un mode de recherche de point de rebroussement. Cette commande est généralement introduite en sélectionnant un bouton de commande 21 prévu sur le pupitre de commande ou une molette (non représentée) près de la touche de palpage 12. La pièce à mesurer 3 ou la colonne de mesure 1 est ensuite déplacée horizontalement, en maintenant la pression d'appui entre la touche de palpage et la pièce, de manière à balayer la zone proche de l'extréma en dépassant au moins une fois le point de rebroussement. Un algorithme de calcul d'extréma détermine la coordonnée verticale du point de rebroussement; un signal acoustique et/ou optique permettant de confirmer que la coordonnée verticale du point a été calculée. L'utilisateur doit ensuite désélectionner le mode de recherche automatique du point de rebroussement, puis déplacer la touche de palpage afin d'effectuer une nouvelle mesure, par exemple pour déterminer la position de l'autre extréma du trou ou de la tige afin de calculer son diamètre. Le brevet Européen EP0243693 au nom de la demanderesse décrit une colonne de mesure dotée d'un système de recherche d'un point de rebroussement.

Ces systèmes ont l'inconvénient de nécessiter un nombre de manipulations important qui rendent leur utilisation peu intuitive. D'autre part, il est nécessaire de lâcher la pièce de mesure 3 ou la manette 13 de contrôle de la position verticale de la touche de palpage pour passer en mode de recherche du point de rebroussement. De surcroît, la présence de boutons de commande 21 dont la seule fonction est de changer le mode de mesure renchérit le dispositif.

US4679326 divulgue une colonne de mesure capable de générer un signal lorsque la touche est en contact avec la pièce à mesurer. Ce signal de contact est utilisé pour déterminer la grandeur présentée sur l'affichage. Le point de rebroussement de la touche ne sont pas déterminés automatiquement.

Un but de la présente invention est donc de proposer un procédé permettant d'introduire les commandes de changement de mode de mesure dans une colonne de mesure de dimension verticale qui évite ces inconvénients, ainsi qu'une colonne de mesure améliorée et plus facile à utiliser que les colonnes de mesure de l'art antérieur.

Selon l'invention, ces objectifs sont atteints au moyen d'un procédé, d'une colonne de mesure et d'un support de données informatique comportant les caractéristiques des revendications indépendantes de type correspondant, des variantes préférentielles étant en outre indiquées dans les revendications dépendantes.

En particulier, ces objectifs sont atteints au moyen d'un procédé permettant d'introduire une commande de changement de mode de mesure dans une colonne de mesure de dimensions, dans lequel cette commande de changement de mode est introduite uniquement en agissant sur la position de la touche de palpage..

Ce procédé a l'avantage que le changement de mode se fait en agissant sur la position de la touche de palpage d'une manière particulière, différente de la manière utilisée pour mesurer une position, et permettant d'indiquer le changement de mode. Il n'est donc pas nécessaire de lâcher la pièce à mesurer 3 ou la manette 13 de commande de hauteur pour changer de mode de mesure. Par ailleurs, aucun bouton supplémentaire 21 n'est nécessaire.

De préférence, le changement de mode de mesure est introduit au moyen de manipulations délibérées de l'organe de contrôle de la position de la touche de palpage, et est confirmé par un signal sonore et/ou visuel. Cela permet d'éviter le risque que le système ne change de mode de mesure de façon impromptue ou indépendamment de la volonté de l'utilisateur.

L'invention part de la constatation que l'attention de l'utilisateur de la colonne de mesure est concentrée à chaque moment sur la position et la trajectoire de la touche de palpage 12. Des tests avec utilisateurs ont montré qu'il est plus rapide et plus intuitif d'introduire des commandes de changement de mode de mesure en agissant sur cette position ou sur cette trajectoire, plutôt qu'en manipulant le pupitre de commande 2 de la colonne de mesure.

Selon une caractéristique préférentielle de l'invention, ces objectifs sont en outre atteints au moyen d'un procédé selon lequel la commande de changement de mode est introduite en appuyant la touche de palpage contre la pièce à mesurer pendant un intervalle de temps supérieur à une valeur prédéterminée.

Cette caractéristique a l'avantage de permettre un changement de mode très facile et intuitif: dès que la touche de palpage est appuyée contre la pièce pendant une durée supérieure à la valeur de seuil prédéterminée, le système de mesure et d'affichage change de mode de mesure. Ce changement peut être confirmé par un signal sonore et/ou visuel.

Selon une autre caractéristique préférentielle de l'invention, la colonne de mesure permet de mesurer la force d'appui entre la touche de palpage et la pièce à mesurer. La commande de changement de mode est de préférence introduite également en agissant sur cette force d'appui, par exemple en gardant la force d'appui constante pendant un intervalle prédéterminé.

De préférence, le changement de mode de mesure est introduit au moyen de manipulations délibérées de l'organe de contrôle de la position de la touche de palpage, et est confirmé par un signal sonore et/ou visuel. Cela permet d'éviter le risque que le système ne change de mode de mesure de façon impromptue ou indépendamment de la volonté de l'utilisateur.

L'invention sera mieux comprise à l'aide de la description donnée à titre d'exemple et illustrée par les figures annexées parmi lesquelles:
La figure 1, déjà décrite, montre une vue schématique d'une colonne de mesure à laquelle l'invention peut être appliquée.
La figure 2 illustre un exemple de pupitre de commande du système de mesure et d'affichage.
La figure 3 illustre une pièce munie d'un trou circulaire dont on souhaite mesurer le diamètre, ainsi que la position de la touche de palpage au début de la recherche du point de rebroussement.
La figure 4 illustre l'état de l'affichage du pupitre de commande au début de la recherche du point de rebroussement.
La figure 5 illustre la même pièce ainsi que la position de la touche de palpage dans l'étape suivante de la recherche du point de rebroussement.
La figure 6 illustre l'état de l'affichage du pupitre de commande au cours de cette étape suivante de la recherche du point de rebroussement.
La figure 7 illustre la même pièce ainsi que la position de la touche de palpage lorsque le point de rebroussement a été balayé.
La figure 8 illustre l'état de l'affichage du pupitre de commande lorsque le point de rebroussement a été trouvé.

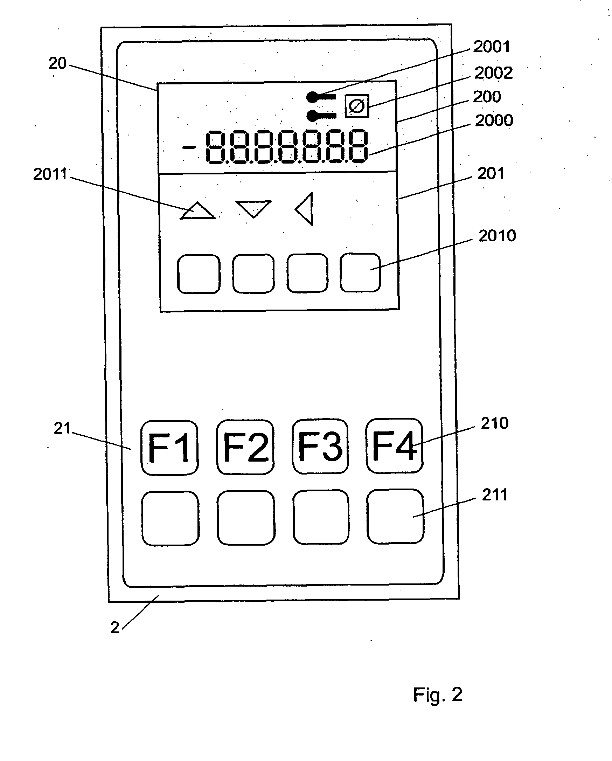

L'invention s'applique aux colonnes de mesure à un ou plusieurs axes, manuelles ou motorisées, par exemple aux colonnes de mesure du type illustré sur la figure 1 et décrit plus haut. La figure 2 illustre un exemple de pupitre de commande 2 du système d'affichage et de mesure de la colonne de mesure de l'invention. Le pupitre de commande comporte un affichage 20, par exemple un affichage à cristaux liquides ou à plasma, ainsi que plusieurs touches de commandes 21. Le système de mesure et d'affichage 2 peut également comporter d'autres moyens d'introduction de données, par exemple une souris, un joystick, un microphone, etc, et d'autres moyens de restitution, par exemple un haut-parleur, une imprimante, une interface sérielle, par exemple de type RS232, infrarouge ou radio, etc. Il est également possible de connecter le système de mesure et d'affichage 2 avec un ordinateur ou dans un réseau.

La partie supérieure 200 de l'affichage 20 permet d'afficher la valeur de la mesure, dans cet exemple au moyen de 7 digits 2000. Cette valeur peut par exemple correspondre à la position verticale absolue de la touche de palpage, à une différence entre deux positions, à un diamètre, etc, selon le mode de mesure sélectionné. Nous verrons plus bas que cette portion 2000 de l'affichage 20 est réutilisée dans le cadre de cette invention comme barregraphe, afin d'indiquer la force d'appui de la touche de palpage contre la pièce à mesurer 3. Une icône 2001 indique si la mesure actuelle inclut un ou deux palpages, par exemple pour la mesure de diamètres. Une icône 2002 indique si l'on souhaite afficher la moyenne ou la différence entre les deux derniers palpages effectués, par exemple pour choisir entre un affichage du centre ou du diamètre d'un trou.

La partie inférieure 201 de l'affichage indique au moyen d'icônes 2010 la fonction courante des touches de fonction programmables 210. Des symboles triangulaires 2011 permettent d'indiquer le sens d'incrémentation ou de défilement de la variable ou du menu sélectionné.

Le pupitre de commande 2 comporte en outre des touches de commandes 21, incluant des touches de fonction programmables 210 et des touches 211 dont la fonction est prédéfinie, par exemple une touche de marche-arrêt, une touche d'impression, etc..

Le système de mesure et d'affichage 2 peut fonctionner selon plusieurs modes de mesure distincts pouvant être sélectionnés au moyen des touches 210-211 ou, selon l'invention, en déplaçant la touche de palpage 12. Les modes de mesure disponibles peuvent comprendre par exemple:
- mesure de coordonnées sans prise en compte d'une constante de palpage, ne permettant donc que la mesure dans un seul sens (vers le haut ou vers le bas), par exemple pour la mesure de pièces en escalier,
- mesure de dimension avec prise en compte d'une constante de palpage, permettant donc la mesure dans les deux sens, par exemple pour la mesure du diamètre d'alésage,
- mesure de diamètres internes ou externe, avec recherche du point de rebroussement,
- mesure avec affichage en continu de la position de la touche de palpage,
- mesure d'écarts de perpendicularité ou de rectitude,
- mesure selon plusieurs axes
- etc.

On comprendra que l'invention peut aussi être mise en oeuvre avec n'importe quel type de pupitre de commande ou de terminal programmable. Le pupitre de commande représenté a néanmoins l'avantage de comporter un affichage et une disposition des touches déjà répandus sur des colonnes de mesure existantes, ce qui permet de réduire les coûts de développement d'un nouveau pupitre. Par ailleurs, les utilisateurs sont déjà habitués à ce type de pupitres. Il est en outre possible de reprogrammer des colonnes de mesure et des systèmes de mesure et d'affichage existants pour mettre en oeuvre l'invention sans apporter de modifications au niveau de l'affichage et des boutons de commande.

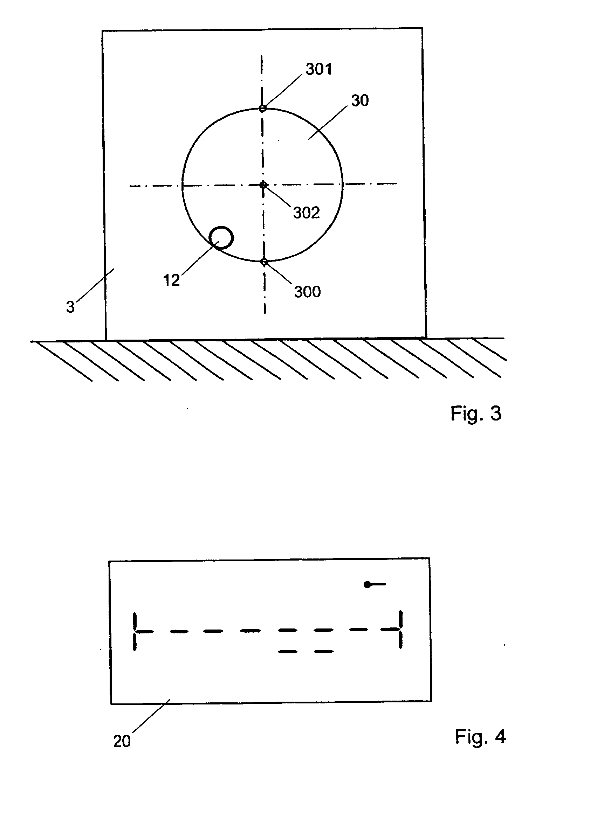

Nous allons maintenant décrire à l'aide des figures 3 à 8 les étapes à mettre en oeuvre pour déterminer le point de rebroussement d'un trou 30 dans une pièce. La description se rapporte plus particulièrement au cas de la détermination du point le plus bas (minima 300) d'un trou 30, dans le cas d'une mesure d'un diamètre intérieur. On comprendra que des étapes identiques ou similaires pourront être mises en oeuvre pour déterminer le point le plus haut du trou (maxima 301), et pour la détermination des extrémas lors de la mesure d'un diamètre externe d'une tige.

Sur la figure 3, la touche de palpage 12 est mise en contact avec un point quelconque de la surface intérieure du trou 30 de la pièce 3 en agissant sur la manivelle 13 ou en déplaçant la pièce 3 ou la colonne 1. L'affichage 20 du système de mesure et d'affichage se met immédiatement en mode barregraphe pour indiquer, à l'aide des digits 2000, la force d'appui de la touche de palpage. La force d'appui peut également être restituée en contrôlant le couple de rotation de la manivelle 13.

Le système de mesure permet également de détecter le sens de la force d'appui et affiche dans cet exemple le barregraphe avec des valeurs négatives. Dans une variante, il est également possible d'afficher la position de la touche de palpage 12 plutôt que la force d'appui, ou en plus de cette force.

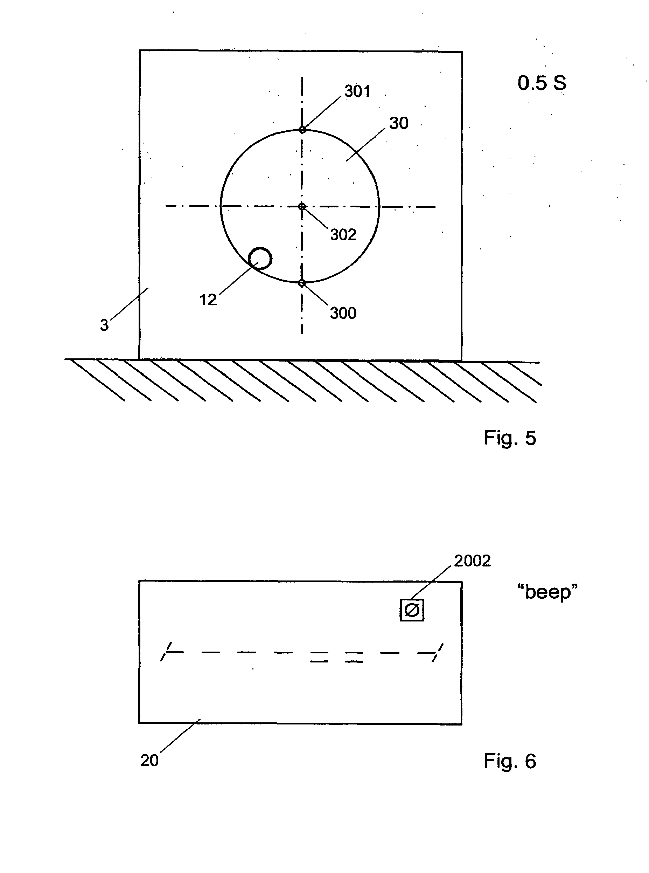

Si la force d'appui est relâchée rapidement, la mesure du point de palpage est prise en compte et affichée sur l'affichage 20. Si au contraire la touche de palpage 12 est maintenue immobile en appui contre la pièce 3, comme illustré sur la figure 5, le système de mesure et d'affichage change automatiquement de mode après un temps prédéterminé, par exemple 0.5 secondes, et passe en mode de recherche du point de rebroussement. Ce changement est indiqué de préférence par un bip sonore et par une modification de l'affichage 20. Dans l'exemple représenté sur la figure 6, une icône 2002 s'affiche pour indiquer que l'on souhaite déterminer les coordonnées du centre d'un trou.

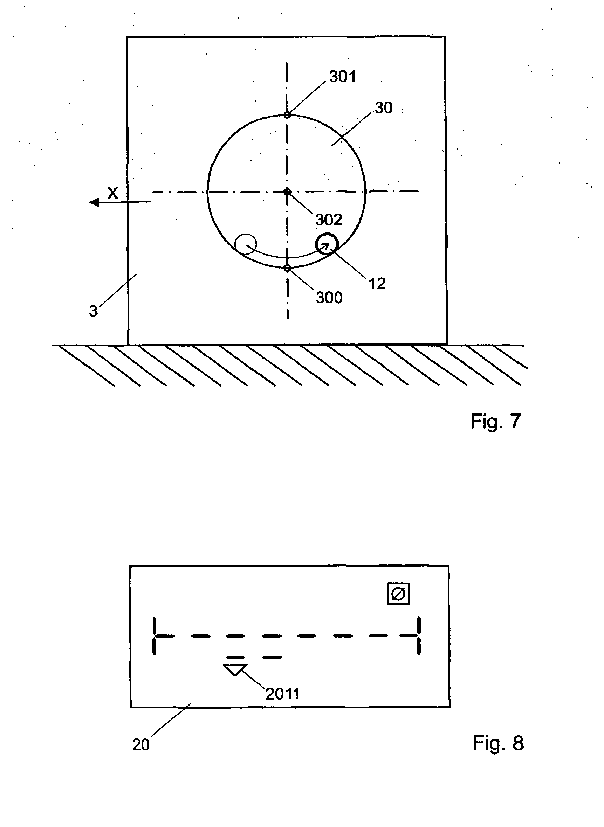

Afin de déterminer le point le plus bas 300 du trou 30, la pièce à mesurer 3 ou la colonne de mesure 1 est ensuite déplacée horizontalement, en contrôlant au moyen de la manivelle 13 la pression d'appui entre la touche de palpage 12 et la pièce, de manière à balayer la zone proche de l'extréma en dépassant au moins une fois le point de rebroussement 300 (figure 7). L'affichage 20 illustré sur la figure 8 indique en permanence la force d'appui entre la touche de palpage 12 et la pièce 3. La mesure du point de rebroussement est annulée lorsque la force d'appui sort d'un intervalle admissible prédéfini et indiqué schématiquement sur l'affichage 20; dans ce cas, le système de mesure et d'affichage retourne dans le mode de mesure initial.

La colonne de mesure reste dans le mode de recherche du point de rebroussement aussi longtemps qu'une force d'appui comprise dans l'intervalle prédéfini est exercée par la touche de palpage contre la pièce à mesurer. Le système de mesure et d'affichage détermine la trajectoire parcourue par la touche de palpage dans ce mode. Un algorithme de calcul d'extréma détermine automatiquement la coordonnée verticale du point le plus bas de cette trajectoire (point de rebroussement 300); une interpolation peut éventuellement être effectuée entre les deux points de mesure extrêmes les plus proches. Un signal acoustique (bip) et/ou optique 2011 est émis dès que la valeur de l'extréma a été trouvée. Afin d'obtenir une mesure plus précise, il est aussi possible de balayer plusieurs fois successivement, en sens inverse, la région autour du point de rebroussement 300. Dans ce cas, le point de mesure extrême est pris en compte. Dans le cas où l'utilisateur génère plusieurs rebroussements successifs de sens opposés sans relâcher la force d'appui, le point de rebroussement mesuré peut être validé seulement lorsque la position verticale de plusieurs d'entre eux se trouve dans un intervalle déterminé.

Il peut arriver qu'un utilisateur inexpérimenté ou distrait déplace la touche de palpage en direction du point le plus bas du trou, puis revienne en arrière sans atteindre ce point 300. Dans ce cas l'extréma sera constitué par le point de rebroussement, qui sera ici différent du point le plus bas 300 du trou. Afin d'éviter des mesures incorrectes, la mesure du point de rebroussement sera de préférence validée uniquement si la dérivée de la position verticale de la trajectoire de la touche de palpage est proche de zéro à l'extréma.

Dès que l'extréma 300 a été trouvé, l'utilisateur peut valider la mesure effectuée en délestant la touche de palpage 12 de manière à la séparer de la pièce 3. Le système de mesure et d'affichage 2 réagit à la diminution de la force d'appui en quittant immédiatement le mode de recherche du point de rebroussement, et en affichant par exemple la coordonnée du point de rebroussement calculé.

Pour mesurer le diamètre et/ou la coordonnée du centre 302 du trou 30, il est ensuite possible de déplacer la touche de palpage 12 contre la portion supérieure du trou 30 et de recommencer la même opération de recherche pour trouver l'extréma supérieur 301 du trou. Le système de mesure et d'affichage peut être programmé pour afficher soit le centre 302 (moyenne des positions 300 et 301) ou le diamètre (différence entre ces valeurs) du trou 30.

Dans le cas d'un trou ou d'une pièce dont l'autre extréma peut être trouvé sans recherche, par exemple dans le cas d'un trou en demi-cercle, il est aussi possible de mesurer directement la coordonnée verticale de cet autre point puis d'afficher la distance entre les deux extrémas. Il est aussi possible de mélanger dans la même mesure deux palpages de figures géométriques présentant des rebroussements de même sens.

Le procédé de l'invention est de préférence mis en oeuvre au moyen d'un système de mesure et d'affichage 2 de conception nouvelle, ou au moyen d'un nouveau programme de commande pour un système de mesure et d'affichage. Il est donc possible de commercialiser soit des nouvelles colonnes de mesure, ou des nouveaux systèmes de mesure et d'affichage 2, ou des programmes informatiques, vendus par exemple sur un support de données informatique approprié, par exemple sur un disque magnétique ou optique ou sous la forme de carte électronique de type EEPROM ou Flash, et destinés à être chargés dans des systèmes de mesure existant.

Bien que la description ci-dessus se rapporte plus particulièrement au cas particulier d'une colonne de mesure de dimension à un seul axe vertical, l'invention peut aussi être appliquée à des colonnes de mesure dans lesquels la touche de palpage peut se déplacer selon plusieurs axes (systèmes de mesure de coordonnées). Dans ce cas, des commandes de changement de mode peuvent aussi être introduites en déplaçant la touche de palpage selon n'importe quel axe ou combinaison d'axes possibles.

Par ailleurs, il est aussi possible d'introduire d'autres commandes de changement de mode de mesure en déplaçant la touche de palpage 12. On pourrait ainsi remettre à zéro, ou recalibrer, le système de mesure en amenant la touche de palpage dans une position réservée, par exemple tout en haut de la colonne, en lui faisant parcourir des trajectoires particulières et/ou en augmentant fortement la force d'appui. On pourrait aussi imaginer d'introduire des commandes de mode d'affichage, par exemple pour sélectionner la langue d'affichage ou l'unité de mesure au moyen de la manivelle 13.

De préférence, le changement de mode de mesure est introduit au moyen de manipulations délibérées de l'organe 13 de contrôle de la position de la touche de palpage. Cela permet d'éviter le risque que le système ne change de mode de mesure de façon impromptue ou indépendamment de la volonté de l'utilisateur. Certains changements de mode pourraient toutefois aussi être commandés en fonction de déplacements de la touche de mesure résultant de mesures normales. On pourrait imaginer par exemple de modifier la précision et/ou la résolution de mesure en fonction de la vitesse de déplacement de la touche de palpage.

## Revendications

1. Procédé permettant d'introduire une commande de changement de mode de mesure dans une colonne de mesure de dimensions (1) munie d'une touche de palpage (12), dans lequel ladite commande de changement de mode de mesure permet de faire passer ladite colonne de mesure (1) dans un mode de recherche du point de rebroussement (300; 301) d'une pièce à mesurer (3), et en ce que ladite commande de changement de mode de mesure est introduite uniquement en agissant sur la position de ladite touche de palpage (12).

2. Procédé selon la revendication précédente, dans lequel ladite commande de changement de mode est introduite en appuyant la touche de palpage (12) contre ladite pièce à mesurer (3) pendant un intervalle de temps supérieur à une valeur prédéterminée.

3. Procédé selon la revendication précédente, dans lequel une mesure du point de palpage est effectuée lorsque la touche de palpage (12) est appuyée contre ladite pièce à mesurer (3) pendant un intervalle de temps inférieur à ladite valeur prédéterminée.

4. Procédé selon la revendication précédente, dans lequel l'état de l'affichage (20) de ladite colonne de mesure (1) se modifie suite audit changement de mode de manière à indiquer l'état de la force d'appui de ladite touche de palpage (12) contre ladite pièce à mesurer (3).

5. Procédé selon la revendication précédente, dans lequel ladite force d'appui est indiquée au moyen d'un barregraphe.

6. Procédé selon l'une des revendications précédentes, dans lequel ladite colonne de mesure (1) reste dans ledit mode de recherche du point de rebroussement aussi longtemps qu'une force d'appui suffisante est exercée par la touche de palpage (12) contre la pièce à mesurer (3), ledit point de rebroussement (300; 301) étant déterminé automatiquement dans la trajectoire parcourue par ladite touche de palpage (12) dans ledit mode de recherche.

7. Procédé selon la revendication précédente, dans lequel ladite mesure du point de rebroussement (300; 301) n'est pas prise en compte lorsque ladite force d'appui sort d'un intervalle admissible prédéfini.

8. Procédé selon l'une des revendications précédentes, dans lequel ledit point de rebroussement (300; 301) est déterminé comme étant l'extréma de la trajectoire verticale parcourue par ladite touche de palpage (12) dans ledit mode de recherche.

9. Procédé selon la revendication 8, dans lequel ledit point de rebroussement (300; 301) est validé uniquement si la dérivée de la position verticale de ladite touche de palpage est proche de zéro audit extréma.

10. Procédé selon l'une des revendications précédentes, dans lequel la région autour du point de rebroussement (300) est balayée plusieurs fois en sens opposés sans relâcher la force d'appui,
le poin de rebroussement mesuré pouvant être validé seulement lorsque la position verticale de plusieurs d'entre eux se trouve dans un intervalle déterminé.

11. Procédé selon l'une des revendications précédentes, dans lequel un signal sonore et/ou visuel est émis lors dudit changement de mode.

12. Procédé selon la revendication 1 dans lequel ladite commande de changement de mode de mesure est introduite au moyen d'une manipulation délibérée d'un organe de contrôle (13) de la position de la touche de palpage (12).

13. Colonne de mesure de dimensions (1), comprenant:
une touche de palpage (12) destinée à être mise en contact avec la pièce à mesurer (3),
un mécanisme de déplacement de ladite touche de palpage (12),
un système de mesure et d'affichage (2) permettant de déterminer et d'afficher la position de ladite touche de palpage (12), ledit système de mesure et d'affichage pouvant fonctionner selon plusieurs modes de mesure distincts, dont un mode de recherche du point de rebroussement (300; 301) de ladite pièce à mesurer (3)
dans lequel au moins ledit mode de recherche du point de rebroussement peut être sélectionné en agissant sur la position de la touche de palpage (12), sans qu'aucune autre manipulation ne soit nécessaire.

14. Colonne de mesure selon la revendication précédente, dans laquelle ledit mode de recherche du point de rebroussement peut être sélectionné en appuyant la touche de palpage (12) contre la pièce à mesurer (3) pendant un intervalle de temps supérieur à une valeur prédéterminée.

15. Colonne de mesure selon la revendication précédente, dans laquelle une mesure du point de palpage est effectuée lorsque la touche de palpage (12) est appuyée contre ladite pièce à mesurer (3) pendant un intervalle de temps inférieur à ladite valeur prédéterminée.

16. Colonne de mesure selon la revendication précédente, comprenant un affichage (20) dont l'état se modifie suite audit changement de mode de manière à indiquer l'état de la force d'appui de ladite touche de palpage (12) contre ladite pièce à mesurer (3).

17. Colonne de mesure selon la revendication précédente, dans laquelle ledit affichage permet d'afficher un barregraphe permettant d'indiquer ladite force d'appui.

18. Colonne de mesure selon l'une des revendications 16 à 17, **caractérisée en ce qu'**elle reste dans ledit mode de recherche du point de rebroussement (300; 301) aussi longtemps qu'une force d'appui suffisante est exercée par la touche de palpage (12) contre la pièce à mesurer (3), ledit point de rebroussement étant déterminé automatiquement dans la trajectoire parcourue par ladite touche de palpage dans ledit mode de recherche.

19. Colonne de mesure selon la revendication précédente, dans laquelle ladite mesure du point de rebroussement (300; 301) n'est pas prise en compte lorsque ladite force d'appui sort d'un intervalle admissible prédéfini.

20. Colonne de mesure selon l'une des revendications 16 à 19, dans laquelle ledit point de rebroussement (300; 301) est déterminé comme étant l'extréma de la trajectoire verticale parcourue par ladite touche de palpage (12) dans ledit mode de recherche.

21. Colonne de mesure selon l'une des revendications 16 à 20, dans laquelle ledit point de rebroussement (300; 301) est validé uniquement si la dérivée de la position verticale de ladite touche de palpage (12) est proche de zéro audit extréma.

22. Colonne de mesure selon l'une des revendications 16 à 21, dans laquelle lorsque la région autour du point de rebroussement (300) est balayée plusieurs fois en sens opposés sans relâcher la force d'appui, le point de rebroussement mesuré est validé seulement lorsque la position verticale de plusieurs d'entre eux se trouve dans un intervalle déterminé.

23. Colonne de mesure selon l'une des revendications 13 à 22 comprenant: un haut-parleur pour émettre un signal sonore lors dudit changement de mode.

24. Support de données informatique comportant un programme de commande pour un système de mesure et d'affichage (2) dans une colonne de mesure de dimensions (1), ledit programme permettant de déterminer et d'afficher la position de la touche de palpage (12) de ladite colonne de mesure, ledit programme permettant de faire fonctionner ledit système de mesure et d'affichage (2) selon plusieurs modes de mesure distincts, dont un mode de recherche du point de rebroussement (300; 301) d'une pièce à mesurer (3), ledit programme permettant de sélectionner ledit mode de recherche du pont de rebroussement uniquement en agissant sur la position de la touche de palpage (12).

## Patentansprüche

1. Verfahren zur Eingabe eines Befehls zum Wechseln des Messmodus in einer Säule zur Messung von Dimensionen (1) mit einem Taster (12), worin der besagte Befehl zum Wechseln des Messmodus es erlaubt, die besagte Messsäule (1) in einen Suchmodus des Umkehrpunktes (300; 301) eines zu messenden Werkstücks (3) zu versetzen, und worin der besagte Befehl zum Wechseln des Messmodus nur durch Einwirkung auf die Position des besagten Tasters (12) eingegeben wird.

2. Verfahren gemäss dem vorhergehenden Anspruch, worin der besagte Befehl zum Wechseln des Messmodus eingegeben wird, indem der Taster (12) gegen das besagte zu messende Werkstück (3) während eines Zeitintervalls grösser als ein vorbestimmter Wert gedrückt wird.

3. Verfahren gemäss dem vorhergehenden Anspruch, worin eine Messung des Tastpunktes durchgeführt wird, wenn der Taster (12) gegen das besagte zu messende Werkstück (3) während eines Zeitintervalls kleiner als ein vorbestimmter Wert gedrückt wird.

4. Verfahren gemäss dem vorhergehenden Anspruch, worin der Zustand der Anzeige (20) der besagten Messsäule (1) sich infolge des besagten Moduswechsel ändert, um den Zustand der Auflagekraft des besagten Tasters (12) gegen das besagte zu messende Werkstück (3) anzuzeigen.

5. Verfahren gemäss dem vorhergehenden Anspruch, worin die besagte Auflagekraft mittels eines Säulengraphs angegeben wird.

6. Verfahren gemäss einem der vorhergehenden Ansprüche, worin die besagte Messsäule (1) im besagten Suchmodus des Umkehrpunktes bleibt, solange eine genügende Auflagekraft durch den Taster (12) gegen das besagte zu messende Werkstück (3) ausgeübt wird, wobei der besagte Umkehrpunkt (300; 301) automatisch in der vom besagten Taster (12) im besagten Suchmodus durchfahrenen Trajektorie bestimmt wird.

7. Verfahren gemäss dem vorhergehenden Anspruch, worin die besagte Messung des Umkehrpunktes (300; 301) nicht berücksichtigt wird, wenn die besagte Auflagekraft ausserhalb eines vordefinierten zulässigen Intervalls fällt.

8. Verfahren gemäss einem der vorhergehenden Ansprüche, worin der besagte Umkehrpunkt (300; 301) als das Extremum der vom besagten Taster (12) im besagten Suchmodus durchfahrenen senkrechten Trajektorie bestimmt wird.

9. Verfahren gemäss Anspruch 8, worin der besagte Umkehrpunkt (300; 301) nur validiert wird, wenn die Ableitung der senkrechten Position des besagten Tasters nahe bei Null am besagten Extremum ist.

10. Verfahren gemäss einem der vorhergehenden Ansprüche, worin der Bereich um den Umkehrpunkt (300) mehrmals in entgegengesetzten Richtungen abgesucht wird, ohne die Auflagekraft zu vermindern,
wobei der gemessene Umkehrpunkt nur validiert werden kann, wenn die senkrechte Position von mehreren von ihnen sich in einem bestimmten Intervall befindet.

11. Verfahren gemäss einem der vorhergehenden Ansprüche, worin ein akustisches und/oder visuelles Signal während eines besagten Moduswechsels ausgesandt wird.

12. Verfahren gemäss Anspruch 1, worin der besagte Befehl zum Wechseln des Messmodus mittels einer absichtlichen Betätigung eines Mittels (13) zur Steuerung der Position des Tasters (12) eingegeben wird.

13. Säule zur Messung von Dimensionen (1), mit:
einem Taster (12), der dazu bestimmt ist, in Kontakt mit dem zu messenden Werkstück (3) gebracht zu werden,
einem Verschiebungsmechanismus des besagten Tasters (12),
einem Mess- und Anzeigesystem (2), welches das Bestimmen und Anzeigen des besagten Tasters (12) erlaubt, wobei das besagte Mess- und Anzeigesystem gemäss mehreren unterschiedlichen Messmodi funktionieren kann, einschliesslich eines Suchmodus des Umkehrpunktes (300; 301) des besagten zu messenden Werkstücks (3),
worin mindestens der besagte Suchmodus des Umkehrpunktes durch Einwirkung auf die Position des Tasters (12) ausgewählt werden kann, ohne dass eine andere Manipulation benötigt wird.

14. Messsäule gemäss dem vorhergehenden Anspruch, worin der Suchmodus des Umkehrpunktes (300; 301) ausgewählt werden kann, indem der Taster (12) gegen das zu messende Werkstück (3) während eines Zeitintervalls grösser als ein vorbestimmter Wert gedrückt wird.

15. Messsäule gemäss dem vorhergehenden Anspruch, worin die Messung des Tastpunktes durchgeführt wird, wenn der Taster (12) gegen das besagte zu messende Werkstück (3) während eines Zeitintervalls kleiner als ein vorbestimmter Wert gedrückt wird.

16. Messsäule gemäss dem vorhergehenden Anspruch, mit einer Anzeige (20), deren Status sich infolge des besagten Moduswechels ändert, um den Zustand der Auflagekraft des besagten Tasters (12) gegen das besagte zu messende Werkstück (3) anzugeben.

17. Messsäule gemäss dem vorhergehenden Anspruch, worin die besagte Anzeige es erlaubt, einen Säulengraph anzuzeigen, der die besagte Auflagekraft anzugeben vermag.

18. Messsäule gemäss einem der Ansprüche 16 bis 17, **dadurch gekennzeichnet, dass** sie im besagten Suchmodus des Umkehrpunktes (300; 301) bleibt, solange eine genügende Auflagekraft durch den Taster (12) gegen das zu messende Werkstück (3) ausgeübt wird, wobei der besagte Umkehrpunkt (300; 301) automatisch in der vom besagten Taster im besagten Suchmodus durchfahrenen Trajektorie bestimmt wird.

19. Messsäule gemäss dem vorhergehenden Anspruch, worin die besagte Messung des Umkehrpunktes (300; 301) nicht berücksichtigt wird, wenn die besagte Auflagekraft ausserhalb eines vordefinierten zulässigen Intervalls fällt.

20. Messsäule gemäss einem der Ansprüche 16 bis 19, worin der besagte Umkehrpunkt (300; 301) als das Extremum der vom besagten Taster (12) im besagten Suchmodus durchfahrenen senkrechten Trajektorie bestimmt wird.

21. Messsäule gemäss einem der Ansprüche 16 bis 20, worin der besagte Umkehrpunkt (300; 301) nur validiert wird, wenn die Ableitung der senkrechten Position des besagten Tasters (12) nahe bei Null am besagten Extremum ist.

22. Messsäule gemäss einem der Ansprüche 16 bis 21, worin wenn der Bereich um den Umkehrpunkt (300) mehrmals in entgegengesetzten Richtungen abgesucht wird, ohne die Auflagekraft zu vermindern, der gemessene Umkehrpunkt nur validiert wird, wenn die senkrechte Position von mehreren von ihnen sich in einem bestimmten Intervall befindet.

23. Messsäule gemäss einem der Ansprüche 13 bis 22, mit einem Lautsprecher, um während des besagten Moduswechsels ein akustisches Signal auszusenden.

24. Informatikdatenträger mit einem Steuerprogramm für ein Mess- und Anzeigesystem (2) in einer Säule zur Messung von Dimensionen (1), wobei das besagte Programm es erlaubt, die Position des Tasters (12) der besagten Messsäule zu bestimmen und anzuzeigen, wobei das besagte Programm das Funktionieren des besagten Mess- und Anzeigesystems (2) gemäss mehreren unterschiedlichen Messmodi erlaubt, einschliesslich eines Suchmodus des Umkehrpunktes (300; 301) eines zu messenden Werkstücks (3), wobei das besagte Programm das Auswählen des besagten Suchmodus des Umkehrpunktes nur durch Einwirkung auf die Position des besagten Tasters (12) ermöglicht.

## Claims

1. Method enabling a command to switch the measurement mode to be entered in a dimension-measuring column (1) provided with a probe tip (12), wherein said command to switch the measurement mode enables said measuring column (1) to pass into a mode to search for the turn-back point (300; 301) of said piece to be measured (3), and wherein said command to switch the measurement mode is entered by only making use of the position of said probe tip (12).

2. Method according to the preceding claim, wherein said command to switch the measurement mode is entered by pressing the probe tip (12) against a piece to be measured (3) during a time interval greater than a predetermined value.

3. Method according to the preceding claim, wherein a measurement of the probing point is effected when the probe tip is pressed against said piece to be measured during a time interval shorter than said predetermined value.

4. Method according to the preceding claim, wherein the status of the display (20) of said measuring column (1) is modified following said mode switch so as to indicate the status of the pressing force of said probe tip (12) against said piece to be measured (3).

5. Method according to the preceding claim, wherein said pressing force is indicated by means of a bar graph.

6. Method according to one of the preceding claims, wherein said measuring column (1) remains in said turn-back point search mode as long as a sufficient pressing force is exerted by the probe tip (12) against the piece to be measured (3), said turn-back point (300; 301) being determined automatically within the trajectory covered by said probe tip (12) in said search mode.

7. Method according to the preceding claim, wherein said measurement of the turn-back point (300; 301) is not taken into account when said pressing force exceeds a predefined admissible interval.

8. Method according to one of the preceding claims, wherein said turn-back point (300; 301) is determined as being the extreme of the vertical trajectory covered by said probe tip (12) in said search mode.

9. Method according to claim 8, wherein said turn-back point (300; 301) is validated only if the derivative of the probe tip's vertical position is close to zero at said extreme.

10. Method according to one of the preceding claims, wherein the area around the turn-back point (300) is scanned several times in succession in opposite directions without the pressing force being released,
the measured turn-back point being validated only when the vertical position of several thereof finds itself within a determined interval.

11. Method according to one of the preceding claims, wherein an aural and/or visual signal is emitted during a said mode switch.

12. Method according to claim 1, wherein said command to switch the measurement mode is entered by means of a deliberate manipulation of a control element (13) of the position of the probe tip (12).

13. Dimension-measuring column (1), comprising:
a probe tip (12) designed for being brought into contact with the piece to be measured (3),
a displacement mechanism of said probe tip (12),
a measuring and displaying system (2) that allows the position of said probe tip (12) to be determined and displayed, said measuring and displaying system being able to function according to several distinct modes, including a mode to search for the turn-back point (300; 301) of said piece to be measured (3),
wherein at least said mode to search for the turn-back point can be selected by acting on the position of the probe tip (12), without any other manipulation being necessary.

14. Measuring column according to the preceding claim, wherein said mode to search for the turn-back point (300; 301) can be selected by pressing the probe tip (12) against the piece to be measured (3) during a time interval greater than a predetermined value.

15. Measuring column according to the preceding claim, wherein the measurement of the probing point is effected when the probe tip (12) is pressed against said piece to be measured (3) during a time interval shorter than said predetermined value.

16. Measuring column according to the preceding claim, comprising a display (20) whose status is modified following said mode switch so as to indicate the status of the pressing force of said probe tip (12) against said piece to be measured (3).

17. Measuring column according to the preceding claim, wherein said display enables the displaying of a bar graph capable of indicating said pressing force.

18. Measuring column according to one of the claims 16 to 17, **characterized in that** it remains in the mode for searching for the turn-back point (300; 301) as long as a sufficient pressing force is exerted by the probe tip (12) against the piece to be measured (3), said turn-back point being determined automatically within the trajectory covered by said probe tip in said search mode.

19. Measuring column according to the preceding claim, wherein said measurement of the turn-back point (300; 301) is not taken into account when said pressing force exceeds a predefined admissible interval.

20. Measuring column according to one of the claims 16 to 19, wherein said turn-back point (300; 301) is determined as being the extreme of the vertical trajectory covered by said probe tip (12) in said search mode.

21. Measuring column according to one of the claims 16 to 20, wherein said turn-back point (300; 301) is validated only if the derivative of the vertical position of the probe tip (12) is close to zero at said extreme.

22. Measuring column according to one of the claims 16 to 21, wherein, when the area around the turn-back point (300) is scanned several times in succession in opposite directions without the pressing force being released, the measured turn-back point is validated only when the vertical position of several thereof finds itself within a determined interval.

23. Measuring column according to one of the claims 13 to 22, comprising a loudspeaker to emit a sound signal during said mode switch.

24. Computer data carrier comprising a command program for measuring and displaying system (2) in a dimension-measuring column (1), said program enabling the position of the probe tip (12) of said measuring column to be determined and displayed, said program being capable of making said measuring and displaying system (2) function according to several distinct modes, including a mode to search for the turn-back point (300; 301) of a piece to be measured (3), wherein said program enables said mode to search for the turn-back point to be selected by only acting on the position of the probe tip (12).
